Europäisches Patentamt

European Patent Office

Office européen des brevets

(11) Veröffentlichungsnummer: **0 151 206**
**A1**

(19)

(12) ## EUROPÄISCHE PATENTANMELDUNG

(21) Anmeldenummer: 84101325.3

(22) Anmeldetag: 09.02.84

(51) Int. Cl.⁴: **B 64 C 27/51**

(43) Veröffentlichungstag der Anmeldung:
14.08.85 Patentblatt 85/33

(84) Benannte Vertragsstaaten:
DE FR GB IT

(71) Anmelder: Messerschmitt-Bölkow-Blohm Gesellschaft
mit beschränkter Haftung
Robert-Koch-Strasse
D-8012 Ottobrunn(DE)

(72) Erfinder: Schwarz, Alois, Dipl.-Ing.
Ahornweg 21
D-8011 Putzbrunn(DE)

(72) Erfinder: Mautz, Karl-Heinz
Brennerstrasse 13
D-8012 Ottobrunn(DE)

(54) Rotor, insbesondere eines Drehflügelflugzeugs.

(57) Bei einem Rotor mit einem Rotorblattanschluß an der
Rotornabe (1) über einen/gabelförmigen Rotorarm (1.1) und
ein in Blattlängsrichtung druckbelastbares Blattwinkellager
zwischen den Schenkeln des Rotorarmes (1.1) und der
Blattwurzel (2) stützt sich das Rotorblatt mit dem Blattwurzelende über einen zur Blattwinkelachse koaxialen Lagerzapfen
(7) an der Rotornabe (1) drehwinkelbeweglich ab. Um hierbei
den Schlaggelenkabstand des Rotorblattes zur Rotordrehachse zu vermindern, ist das Blattwinkellager ein sphärisches Gelenklager (3) und der Lagerzapfen (7) bzw. ein
diesem zugeordnetes Lager (9) nur in Blattschwenkrichtung
gegen die Rotornabe (1) gestützt.

FIG. 1

EP 0 151 206 A1

MBB

Patentabteilung

1

01.02.84
Hb-ma
9501

0151206

Rotor, insbesondere eines Drehflügelflugzeuges

Die Erfindung betrifft einen Rotor gemäß dem Oberbegriff des Patentanspruchs 1.

Ein derartiger Rotor hat in der durch die DE-PS 27 12 706 bekannten Ausführungsform den Nachteil von hohen Biegemomentbelastungen des Rotormastes, weil die Schlagbewegungen des Rotorblattes aufgrund eines fiktiven Gelenkes im elastischen Blattbereich "Blatthals" ausgeführt werden müssen, also der Schlaggelenkabstand zur Rotordrehachse relativ groß ist. Die Folge eines großen Schlaggelenkabstandes und damit großer Rotorarm- und Rotormastmomente sind zwangsläufig entsprechend hohe Festigkeitsanforderungen an den Rotor, die einer Senkung seines Baugewichts entgegenstehen.

Der Erfindung liegt daher die Aufgabe zugrunde, bei einem Rotor der eingangs genannten Art den Schlaggelenkabstand des einzelnen Rotorblattes zur Rotordrehachse zu vermindern. Ein bevorzugter Schlaggelenkabstand zur Rotordrehachse sind etwa 5 % des Rotorradius.

Diese Aufgabe ist gemäß dem Kennzeichen des Patentanspruchs 1 gelöst in der Erkenntnis, daß mit der Freigabe des Blattwurzelendes in Blattschlagrichtung das Blattwinkellager in der gekennzeichneten Ausgestaltung zugleich die Schlaggelenkfunktion erfüllt zwangsläufig mit geringstmöglichem Schlaggelenkabstand zur Rotordrehachse bei dem Rotor der genannten Gattung . Dabei ist dieses sphärische Gelenklager gleichzeitig als Schwenkgelenk nutzbar, sofern für die Abstützung des Blattwurzelendes gemäß dem Unteranspruch 2 ein Dämpfer maßgebend ist, vorzugsweise in der im Unteranspruch 3 gekennzeichneten baulich einfachen
und dennoch ...

hochwirksamen Anordnung und Ausgestaltung.

Nachfolgend wird die Erfindung anhand eines Ausführungsbeispiels weiter erläutert. Hierzu zeigt die Zeichnung in

Fig. 1    in der Draufsicht, teils aufgebrochen, einen Ausschnitt einer Rotornabe mit einem Abschnitt eines Rotorblattes,

Fig. 2    einen Schnitt gemäß Schnittlinie II-II der Fig.1,

Fig. 3    einen Schnitt gemäß Schnittlinie III-III der Fig.1.

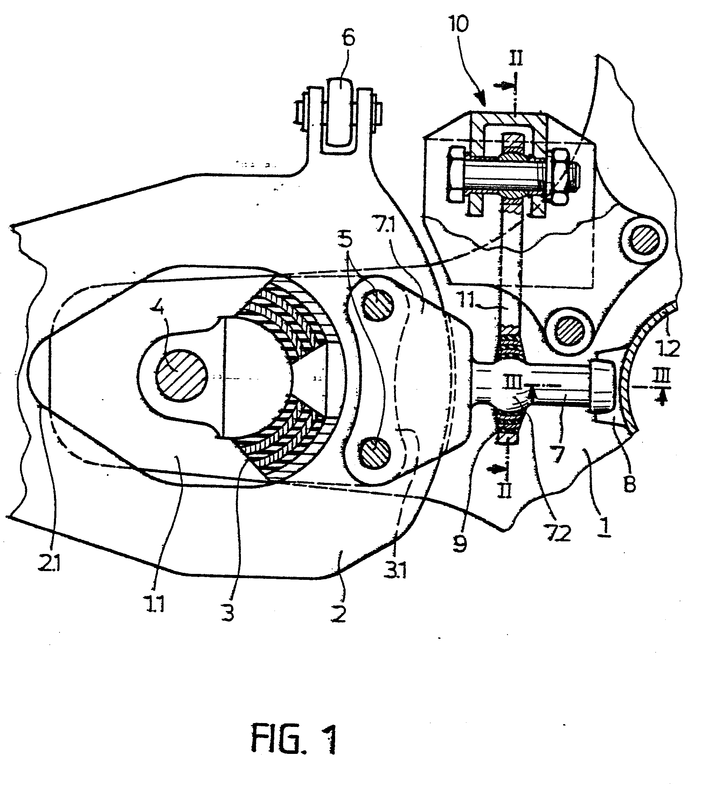

Die in Fig. 1 dargestellte Rotornabe 1 weist (beispielsweise wie diejenige des durch die eingangs genannte DE-PS 27 12 706 bekannten Rotors) für den Rotorblattanschluß je Blattwurzel 2 einen radial auswärtsgerichteten gabelförmigen Rotorarm 1.1 auf (wovon nur der untere Gabelschenkel ersichtlich ist). Die Verbindung zwischen dem Rotorarm 1.1 und der Blattwurzel 2 ist über ein in einer Ausnehmung 2.1 derselben zwischen den beiden Gabelschenkeln des Rotorarmes angeordnetes Elastomerlager 3 hergestellt, das einerseits mittels eines die Blattwinkelachse kreuzenden Bolzens 4 am Rotorarm 1.1 bzw. an dessen Gabelschenkeln und andererseits über ein Gabelstück 3.1 mittels zweier zur Blattwinkelachse symmetrisch angeordneter Bolzen 5 an der Blattwurzel 2 befestigt ist. Das Elastomerlager 3 ist als ein sphärisches Gelenk ausgestaltet, damit es nicht nur die Funktion einer die Blattfliehkräfte aufnehmenden (d.h. in Blattlängsrichtung druckbelastbaren) und aber hierbei Blattwinkelbewegungen (d.h. über eine Steuerstange 6 die Blatteinstellwinkelverstellung) zulassenden Verbindung                ...

erfüllen kann, sondern zugleich auch die Funktion eines Blattschlag- und Blattschwenkbewegungen zulassenden Gelenkes. Hierbei ist der Schlaggelenkabstand zur Rotordrehachse (Rotormast 1.2) durch den Einbau des Elastomerlagers 3 in der Blattwurzel 2 auf ein Minimum reduziert.

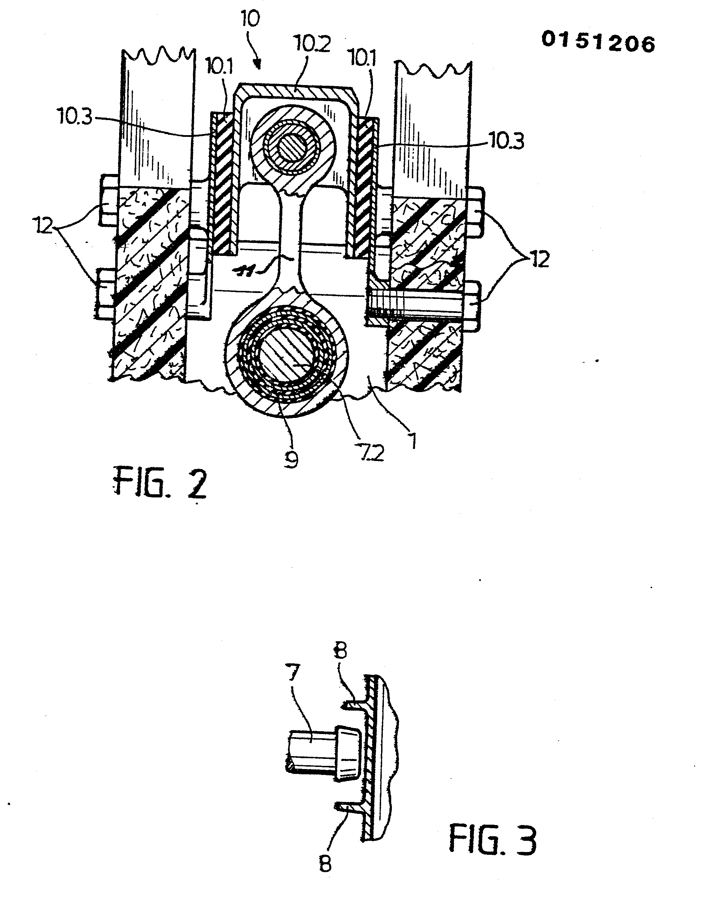

Damit die bei einem solchen gelenkigen Blattanschluß nötige Abstützung des Rotorblattes bzw. des über das Elastomerlager 3 hinausgehenden Endes der Blattwurzel 2 an der Rotornabe 1 in Blattschwenkrichtung nicht die Doppelgelenkfunktion "Schlaggelenk und zugleich Schwenkgelenk" des Elastomerlagers 3 zunichte macht, ist der betreffende am Blattwurzelende über ein Gabelstück 7.1 mittels der (Lageranschluß-)Bolzen 5 in koaxialer Lage zur Blattwinkelachse angeschlossene Lagerzapfen 7 in Blattschlagrichtung ungestützt, d.h. über einen durch Anschläge 8 (Fig. 3) begrenzten Blattschlagwinkel frei bewegbar. Diese beiden Anschläge 8 an der Rotornabe 1 dienen bloß der Entlastung des Elastomerlagers 3 bei Rotorstillstand. Im Rotorbetrieb soll folglich das Rotorblatt bzw. dessen Blattwurzel 2 allein in Blattschwenkrichtung gegen die Rotornabe 1 gestützt sein, was durch ein um einen kugeligen Abschnitt 7.2 des Lagerzapfens 7 angeordnetes und nur in Blattschwenkrichtung fixiertes Lager 9, vorzugsweise auch in elastomerer Gelenklagerbauweise, erreicht wird. Das Mittel der Fixierung bzw. Verbindung dieses Lagers 9 mit der Rotornabe 1 ist vorzugsweise ein (Schwenkbewegungs-)Dämpfer 10, der im Rahmen der vorliegenden Erfindung mit einem Minimum an baulichem Aufwand für eine hochwirksame Blattschwenkdämpfung sorgt. Dieser Dämpfer 10 beruht, wie insbesondere aus Fig. 2 hervorgeht, auf dem Prinzip der Ausnutzung der Dämpfungswirkung von Elastomerschichten 10.1 bei Schubverformung. Die Schubverformung wird durch Blattschwenkbewegungen bewirkt, weil der Außenkörper des Lagers 9 ein Kopf einer Pleuel- ...

stange 11 ist, die andererseits mit der Basis eines im Querschnitt gabelförmigen, steifen Innenkörpers 10.2 des Dämpfers 10 gelenkig verbunden ist, und weil hierbei die beiden zur Rotorebene parallelen Schenkel des Innenkörpers 10.2 jeweils über eine der beiden Elastomerschichten 10.1 mit je einer an der Rotornabe 1 über Bolzen 12 angeschlossenen steifen Deckplatte 10.3 verbunden sind. Natürlich können zwischen dem Innenkörper 10.2 und den beiden Deckplatten 10.3 auch mehrere (durch steife Zwischenschichten getrennte) Elastomerschichten vorgesehen sein je nach gewünschter Dämpferwirkung.

Demnach leistet die Erfindung zugleich einen wesentlichen Beitrag im Bestreben nach Anwendung der in der eingangs genannten DE-PS beschriebenen Rotornabenbauweise für große Rotoren, bei denen bekanntlich eine hochwirksame Schwenkdämpfung der Rotorblätter unerläßlich ist.

...

MBB

Patentabteilung

01.02.84
Hb-ma 0151206
9501

Rotor, insbesondere eines Drehflügelflugzeuges

Patentansprüche

1. Rotor, insbesondere eines Drehflügelflugzeugs, dessen Rotorblätter an der Rotornabe über je einen gabelförmigen Rotorarm und ein zwischen dessen Schenkeln und der Blattwurzel angeordnetes, in Blattlängsrichtung druckbelastbares Blattwinkellager angeschlossen sind, wobei sich das Rotorblatt mit dem Blattwurzelende über einen zur Blattwinkelachse koaxialen Lagerzapfen an der Rotornabe drehwinkelbeweglich abstützt, dadurch g e - k e n n z e i c h n e t , daß das von der Blattwurzel (2) umschlossene, druckbelastbare Blattwinkellager ein sphärisches Gelenklager (3) und der Lagerzapfen (7) bzw. ein diesem zugeordnetes Lager (9) gegen die Rotornabe (1) nur in Blattschwenkrichtung gestützt ist.

2. Rotor nach Anspruch 1, dadurch gekennzeichnet, daß das dem Lagerzapfen (7) zugeordnete Lager (9) mit der Rotornabe (1) über einen (Blattschwenkbewegungs-)Dämpfer (10) verbunden ist.

. . .

3. Rotor nach Anspruch 2, dadurch gekennzeichnet, daß der Außenkörper des Lagers (9) ein Kopf einer in der Rotorebene angeordneten Stange (11) ist, die andererseits an der Basis eines im Querschnitt gabelförmigen Innenkörpers (10.2) des Dämpfers (10) angelenkt ist, und die beiden zur Rotorebene parallelen Schenkel des Innenkörpers (10.2) jeweils über wenigstens eine Elastomerschicht (10.1) mit je einer an der Rotornabe (1) angeschlossenen Deckplatte (10.3) verbunden sind.

...

FIG. 1

0151206

FIG. 2

FIG. 3

9501

Europäisches
Patentamt

EUROPÄISCHER RECHERCHENBERICHT

Nummer der Anmeldung

0151206

EP 84 10 1325

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | FR-A-2 457 804 (WESTLAND) * Seite 2, Zeile 30 - Seite 3, Zeile 4; Seite 3, Zeilen 8-32; Seite 5, Zeile 33 - Seite 6, Zeile 22; Figuren 1-3 * | 1,2 | B 64 C 27/51 |
| Y | FR-A-2 004 556 (BOEING) * Seite 2, Zeilen 14-39; Seite 4, Zeilen 25-33; Seite 5, Zeilen 29-37; Figuren 1-3 * | 1,2 | |
| A | DE-A-3 109 690 (M.B.B.) * Seite 5, Zeile 16 - Seite 6, Zeile 10; Figur 1 * | 1 | |
| A,D | FR-A-2 392 875 (M.B.B.) * Seite 5, Zeilen 12-36; Figur 3 * | 1 | RECHERCHIERTE SACHGEBIETE (Int. Cl. ³) |
| | | | B 64 C |

Der vorliegende Recherchenbericht wurde für alle Patentansprüche erstellt.

| Recherchenort | Abschlußdatum der Recherche | Prüfer |
|---|---|---|
| DEN HAAG | 09-11-1984 | ZERI A. |